# DEMANDE DE BREVET EUROPEEN

(11) **EP 0 949 222 A1**
(43) Date de publication de la demande: **13.10.1999**
(21) Numéro de dépôt: 98490011.8
(22) Date de dépôt: 07.04.1998
(51) Int. Cl.: C05F 5/00, C05F 7/00

(54) **Unité et procédé de traitement des boues et produit de fertilisation**

(71) Demandeur: Paul & Raoul Legrand Société Anonyme, 62000 Arras (FR)
(72) Inventeur: Delval, Luc, 62000 Arras (Pas-de-Calais) (FR); Mariani, Pierre, 62000 Arras (Pas-de-Calais) (FR)
(74) Mandataire: Lepage, Jean-Pierre

(57) **Abrégé**

L'invention concerne un procédé et une unité de traitement des boues telles que celles issues de la décantation des vinasses dans les cuves de stockage (17). L'unité de traitement permet la mise en oeuvre du procédé selon l'invention et comporte:
- des moyens d'évacuation (2) des boues hors de la cuve (17) tels que des moyens de pompage,
- des moyens de séparation (3) de la phase solide et de la phase liquide des boues,
évitant les pertes de volume de stockage dans les cuves et autorisant la réinjection de la phase liquide dans les cuves et le recyclage de la phase solide.

Le procédé et l'unité trouveront leur application notamment dans l'industrie de stockage et de négoce de produits liquides issus des industries sucrières.

L'invention concerne également un produit de fertilisation notamment pour l'épandage agricole. Ce produit est caractérisé par le fait qu'il comprend un desséchant végétal (6) et un composant constituté par la phase solide des boues issues de la décantation des vinasses.

## Description

La présente invention concerne un procédé et une unité de traitement des boues telles que celles issues de la décantation des vinasses dans les cuves de stockage. L'invention concerne également un produit de fertilisation obtenu par la mise en oeuvre du procédé ou l'utilisation de l'unité de traitement des boues.

L'invention trouvera son application notamment dans le domaine du stockage et du négoce de produits liquides issus de l'industrie sucrière. Le produit selon l'invention s'appliquera principalement au domaine agricole et en particulier pour l'épandage dans les cultures.

L'industrie sucrière de fermentation et de distillation produit des liquides tels que des vinasses ou des mélasses qui sont réutilisables par exemple pour l'alimentation du bétail. Dans l'attente de leur revente et de la livraison, ces produits liquides sont le plus souvent stockés au moyen de cuves de diamètre variable mais souvent important.

La nature de ces produits liquides d'origine sucrière, et principalement les vinasses, est telle que l'on constate depuis fort longtemps un phénomène de décantation dans les cuves de stockage. Ainsi, des éléments solides se présentant par exemple sous forme de cristaux s'accumulent dans le fond des cuves de stockage de façon importante.

Ce phénomène de décantation est particulièrement dommageable puisqu'il implique des problèmes d'évacuation des boues formées dans le fond des cuves et une perte de capacité de stockage. Le coût financier de l'évacuation des boues et de la limitation des volumes de stockage des cuves est important.

Par ailleurs, les débouchés dans l'industrie alimentaire pour le bétail concernent la partie liquide des produits et les boues récupérées dans le fond des cuves sont inutilisable à ces fins.

Pour remédier au problème de la décantation des boues, on connaît actuellement différents procédés tendant à les éliminer des cuves de stockage.

Ainsi, il est connu de découper une partie de la paroi du fond des cuves pour autoriser le passage d'engins tels que des transporteurs à godets sur roues ou sur chenilles afin d'évacuer les boues. Une autre solution actuellement utilisée consiste en des racleurs introduits par le trou d'homme que comportent les cuves afin de sortir les boues.

Une fois l'évacuation effectuée les boues s'amoncellent généralement à l'extérieur sans précaution particulière.

Les inconvénients des procédés d'évacuation des boues actuellement utilisés sont nombreux. En premier lieu, les opérations d'évacuation sont lourdes et particulièrement longues. Les engins utilisés sont en effet peu adaptés au problème considéré et leur technique fait fortement appel à la main-d'oeuvre.

De plus, les procédés d'évacuation ne prévoient actuellement aucun traitement des boues qui sont perdues ou encore utilisées à titre d'épandage agricole. Dans ce cas, la consistance même des boues n'est pas maîtrisée ce qui entraîne de nombreuses difficultés dans l'épandage de par le caractère épais et très visqueux des boues.

Un inconvénient important des procédés actuels est donc que les boues évacuées ne sont pas valorisées et efficacement recyclables.

Un autre inconvénient des techniques actuelles est que le stockage effectué à l'extérieur une fois les boues évacuées de la cuve n'évite pas tout risque de contamination de l'environnement et notamment des nappes phréatiques.

La tendance des techniques actuelles est donc de rechercher à éliminer les boues dans leur état de base. Les boues sont alors considérées comme des rebuts et non comme de véritables matériaux objets à recyclage.

Par ailleurs, les techniques actuelles recherchent plutôt à fluidifier les boues évacuées des cuves afin de faciliter l'épandage agricole.

La présente invention concerne un procédé et une unité de traitement des boues permettant de remédier aux problèmes liés à la décantation des boues et de pallier les inconvénients des techniques actuelles. Elle concerne également un produit de fertilisation obtenu par la mise en oeuvre du procédé ou l'utilisation de l'unité de traitement.

Un premier objet de l'invention est de permettre l'évacuation des boues issues de la décantation de produits liquides tels que des vinasses dans les cuves de stockage. Elle autorise de cette façon un gain de volume dans les cuves ainsi qu'un gain financier.

Un autre objet de l'invention est de proposer un recyclage efficace et intéressant des boues. A l'heure actuelle, les boues sont considérées comme des rebuts faiblement valorisés. La présente invention dépasse ce préjugé en autorisant une valorisation importante de ce matériau. Elle permet en effet de réinjecter la phase liquide des boues dans les cuves à titre de matière noble initiale et de recycler la phase solide des boues pour former notamment des produits de fertilisation performants.

L'invention a donc l'avantage de recycler l'ensemble des boues et de les valoriser. Le gain financier s'opère également par ce biais.

Un autre but de l'invention est d'éviter toute pollution du sol ou des nappes phréatiques lors de l'évacuation et du traitement des boues. Pour ce faire, le procédé et l'unité de traitement ici décrits ne comportent aucune phase où les boues sont en contact avec l'extérieur et plus particulièrement avec le sol.

Un autre but de l'invention est de présenter une unité de traitement qui soit pratique d'utilisation et mobile. Elle est ainsi transportable sur les différents sites de stockage et mise en oeuvre par un personnel peu important qui n'est pas relégué à des tâches relativement ingrates comme c'est le cas pour les techniques actuelles.

Un autre objet de l'invention est de proposer un produit de fertilisation qui soit utilisable de façon pratique notamment pour l'épandage agricole. Les techniques actuelles s'orientent vers le recyclage tel quel des boues ce qui présente de nombreux inconvénients en matière d'épandage, notamment pour le réglage des machines selon la viscosité et la fluidité des boues. Contrairement à ces tendances, l'invention propose une nouvelle voie de recyclage par le biais d'un produit solide.

Ce produit a l'avantage de se présenter sous une forme mieux utilisable notamment parce qu'il est combiné avec un desséchant qui rend le produit très friable et homogène.

D'autres buts et avantages apparaîtront au cours de la description qui va suivre qui n'est cependant donnée qu'à titre indicatif.

La présente invention concerne un procédé de traitement des boues, telles que celles issues de la décantation des vinasses dans les cuves de stockage, notamment utilisable dans l'industrie de stockage et de négoce de produits liquides issus des industries sucrières, caractérisé par le fait que :
- on évacue les boues hors de la cuve,
- on sépare la phase solide de la phase liquide des boues pour éviter les pertes de volume de stockage dans les cuves et autoriser la réinjection de la phase liquide dans les cuves et le recyclage de la phase solide.

Elle concerne également une unité de traitement des boues, telles que celles issues de la décantation des vinasses dans les cuves de stockage, pour la mise en oeuvre du procédé, notamment utilisable dans l'industrie de stockage de négoce de produits liquides issus des industries sucrières, caractérisée par le fait qu'elle comporte :
- des moyens d'évacuation des boues hors de la cuve tels que des moyens de pompage,
- des moyens de séparation de la phase solide et de la phase liquide des boues,
   évitant les pertes de volume de stockage dans les cuves et autorisant la réinjection de la phase liquide dans les cuves et le recyclage de la phase solide.

Elle concerne enfin un produit de fertilisation, notamment pour l'épandage agricole caractérisé par le fait qu'il comprend :
- un desséchant végétal,
- un composant constitué par la phase solide des boues issues de la décantation des vinasses.

L'invention sera mieux comprise au vu des planches de dessins situées en annexe et qui comprennent :
- la figure 1 présentant une vue d'ensemble de l'unité de traitement selon un mode particulier de l'invention,
- la figure 2 illustrant une vue arrière de l'unité dans un autre mode de réalisation.

Dans les sites de stockage de vinasses actuels, les produits sous forme liquide sont stockés dans des cuves (17) pouvant présenter plusieurs mètres de diamètre et une hauteur de l'ordre d'une dizaine de mètres.

Ces cuves atteignent communément des volumes de deux à cinq mille mètres cubes. On peut trouver environ cent tonnes de boues dans une cuve de trois mille mètres cubes.

La décantation observée représente une hauteur de boues souvent considérable, de l'ordre de quelques mètres de hauteur.

Le procédé de traitement des boues selon l'invention comprend d'abord une étape d'évacuation des boues hors de la cuve (17).

On sépare ensuite la phase solide de la phase liquide des boues.

Préférentiellement, la phase liquide est réinjectée dans les cuves de stockage (17) puisqu'elle a retrouvé son aspect originel liquide.

Quant à la phase solide, elle pourra constituer un matériau susceptible d'être recyclé et notamment un produit de fertilisation (20).

Pour ce faire, on incorpore un desséchant végétal (6) à la phase solide des boues pour former un mélange. Ce mélange peut être utilisé pour de l'épandage agricole. Le desséchant végétal (6) peut être de la sciure de bois et confère aux produits de fertilisation (20) un caractère plus friable et pulvérulent ainsi qu'un plus grand assèchement. En effet, la phase solide issue de la séparation s'avère parfois encore un peu humide et le desséchant végétal (6) renforce son assèchement.

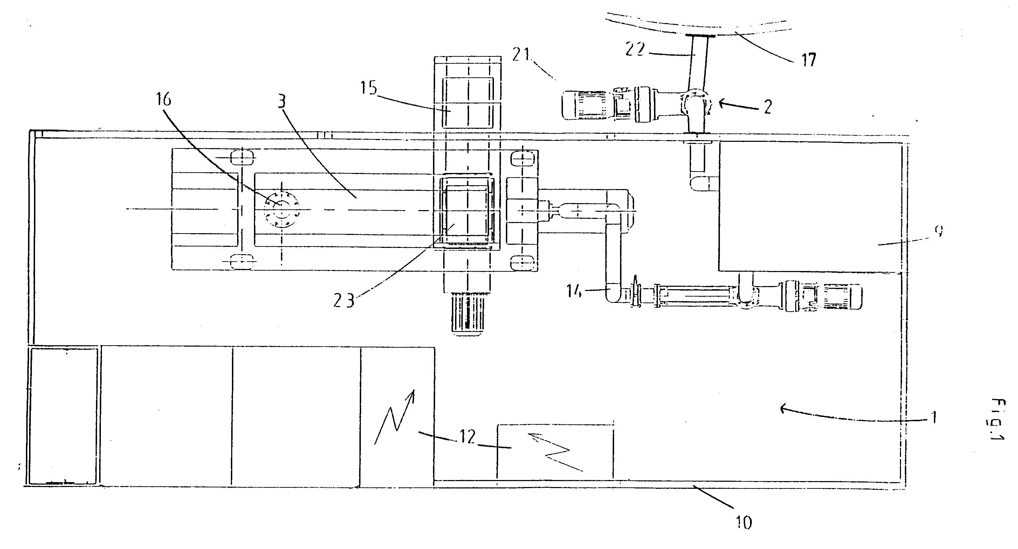

L'unité (1) de traitement des boues selon l'invention comprend des moyens d'évacuation (2) des boues hors de la cuve (17). Tels que représentés à la figure 1, ces moyens (2) peuvent être constitués par un réseau de pompage comportant une pompe (21) proprement dite ainsi qu'un ensemble de tuyaux (22). Les moyens d'évacuation (2) permettent l'élimination des boues à l'intérieur des cuves (17). Ces cuves (17) bénéficient alors à nouveau de leur volume de stockage utile normal.

Les moyens d'évacuation (2) amènent les boues jusqu'à des moyens de séparation (3) de la phase solide et de la phase liquide des boues.

Ces moyens de séparation seront notamment une centrifugeuse ou une décanteuse telle qu'illustrée à la figure 1. La décanteuse (3) ici présentée est de conception courante. Elle permet la récupération de la phase solide au niveau d'une sortie (23) et de la phase liquide au niveau d'une sortie (16).

Selon un mode de réalisation particulier, l'unité de traitement (1) comporte une cuve intermédiaire (9) placée en amont des moyens de séparation (3). La cuve intermédiaire (9) autorise d'éventuels prémélanges des boues issues des cuves de stockage (17). La cuve intermédiaire (9) pourra se présenter sous diverses formes et comporter un volume variable suivant le débit des boues à traiter et la nature des adjuvants à intégrer dans les boues.

Le transfert des boues depuis les moyens d'évacuation (2) jusqu'aux moyens de séparation (3) s'effectue par des moyens de transfert (14) par exemple constitués par un ensemble de pompes péristaltiques et de tuyaux. Ce système a l'avantage d'alimenter directement les moyens de séparation (3) sans aucun contact des boues avec l'extérieur.

Dans un mode particulier de réalisation, l'unité (1) comprend des moyens d'incorporation d'un desséchant végétal (6) à la phase solide des boues. Comme cela a déjà été présenté, l'incorporation d'un desséchant végétal (6) assure l'obtention d'un produit valorisable sous forme de fertilisant.

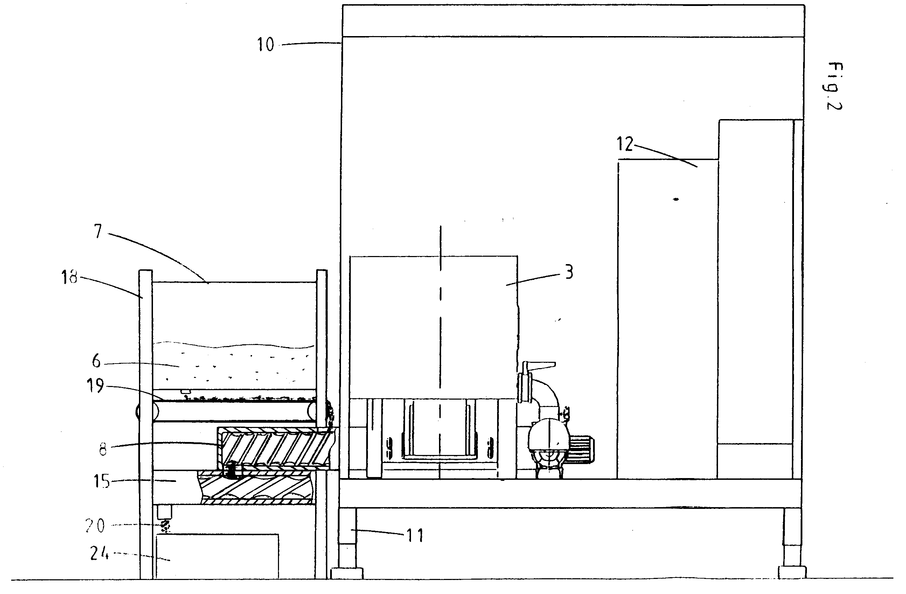

Les moyens d'incorporation comportent tout d'abord un élément de stockage du desséchant (6) tel qu'une trémie (7) illustrée à la figure 2.

Cette trémie renferme le desséchant (6) et en assure un débit réglable jusqu'à des moyens de mélange du desséchant (6) de la phase solide tel qu'un dispositif à vis sans fin (8). Un tel dispositif (8) est également illustré à la figure 2.

Tel que représenté, le dispositif à vis sans fin (8) est placé sensiblement en dessous de la trémie (7) et reçoit d'une part la phase solide issue de la décantation au niveau de la sortie (23) et d'autre part, le desséchant (6) délivré par la trémie (7).

Pour assurer l'arrivée du desséchant (6) jusqu'au dispositif (8), l'invention pourra présenter des moyens d'amenée sous forme d'un tapis convoyeur (19).

Ainsi, le desséchant (6) distribué par la trémie (7) est convoyé par le tapis (19) jusqu'à une entrée du dispositif de mélange (8). Au sein de ce dispositif (8), le desséchant (6) et la phase solide sont alors mélangés notamment par brassage lorsqu'il s'agit d'un dispositif à vis sans fin.

Le mélange ainsi obtenu peut être stocké notamment au moyen d'un récipient (24) tel qu'illustré à la figure 2. Des éléments supplémentaires de transfert peuvent être employés à la sortie des moyens de mélange (8) jusqu'au récipient (24). Ainsi, selon le mode de réalisation de la figure 2, une vis sans fin (15) assure le déplacement du produit de fertilisation (20). D'autres éléments intermédiaires convoyeurs peuvent être également utilisés.

Les sites de stockage de produits liquides tels que des vinasses sont généralement implantés dans différentes régions géographiques. Pour permettre une économie importante, il est particulièrement avantageux que l'unité de traitement (1) soit mobile.

Il est ainsi possible de la transporter sur les différents sites de stockage et au plus près des cuves à évacuer.

Pour ce faire, l'invention pourra comprendre un conteneur (10) susceptible d'être chargé sur un véhicule. Le conteneur (10) permet de contenir les autres éléments constitutifs de l'unité de traitement (1). Un conteneur (10) tel qu'illustré aux figures 1 et 2 comprend différentes parois et forme un ensemble parallélépipédique. Le conteneur (10) pourra être en différents matériaux et notamment métallique. Son volume intérieur sera choisi de façon à ce qu'il puisse intégrer l'ensemble des éléments constitutifs de l'unité (1).

Pour permettre la mobilité de l'unité (1), celle-ci pourra également comprendre des jambes hydrauliques (11) disposées à l'extérieur du conteneur (10) et permettant de soulever celui-ci pour son chargement sur le véhicule. La figure 2 illustre un mode de réalisation des jambes hydrauliques qui se présenteront sous forme de systèmes vérin et piston.

La présente invention concerne également un produit de fertilisation (20). Ce produit peut être utilisé pour l'épandage agricole et assure un recyclage valorisant de la phase solide des boues.

A titre indicatif, on a observé que la séparation des phases liquides et solides des boues permettait de récupérer environ cinquante pour cent de liquide. Les cinquante pour cent restants sont généralement constitués de cristaux beaucoup plus secs que les boues à l'état initial. Ces cinquante pour cent sont ici appelés phase solide.

Le produit de fertilisation (20) comprend en mélange un desséchant végétal (6) et la phase solide. Le desséchant végétal pourra notamment être de la sciure de bois. Il sera choisi de façon à compléter l'assèchement de la phase solide. Il devra également autoriser la dégradation biologique du produit de fertilisation (20). Les proportions du mélange pourront être variables et par exemple être de l'ordre de cinquante pour cent bien que cet exemple ne soit pas limitatif.

L'unité de traitement (1) et le procédé selon l'invention s'utilisent de façon très pratique.

Dans le cas d'une unité (1) mobile, celle-ci est amenée à proximité de la cuve (17) à traiter.

Les moyens d'évacuation (2) sont mis en place pour assurer l'amenée des boues jusqu'au reste de l'unité (1).

Les boues arrivent soit directement aux moyens de séparation (3) soit sont acheminées dans un premier temps à une cuve intermédiaire pour effectuer d'éventuels prémélanges et dans un deuxième temps aux moyens de séparation (3).

Ces différents transferts de boues peuvent être effectués au moyen de tuyauterie et d'organes de pompage tels que des pompes péristaltiques.

Les boues sont ainsi amenées jusqu'à l'entrée des moyens de séparation (3) qui peut être une décanteuse. La séparation effectuée, la phase solide est récupérée au niveau d'une sortie (23) et la phase liquide au niveau d'une sortie (16).

La phase liquide peut alors être réinjectée dans les cuves de stockage (17) par le biais de canalisations ou d'autres moyens de conception courante.

La phase solide peut être stockée ou encore, dans un autre mode de réalisation, subir une étape supplémentaire par le biais des moyens d'incorporation d'un desséchant végétal (6).

Selon ce mode de réalisation, l'unité 1 comprend un élément de stockage du desséchant (6) par exemple sous forme de trémie (7). La trémie (7) assure un débit régulier du desséchant (6). Celui-ci peut être convoyé par l'intermédiaire d'un tapis convoyeur (19) jusqu'à des moyens de mélange (8).

A ce niveau, le desséchant (6) entre dans le dispositif (8) tout comme la phase solide récupérée à la sortie (23). Le dispositif (8) pourra être d'un type à vis sans fin et assure le mélange des deux composants en vue de la formation du produit de fertilisation (20).

Telle qu'illustrée à la figure 2, l'unité (1) pourra comprendre d'autres éléments de transfert tels qu'une vis sans fin (15) assurant l'arrivée du produit de fertilisation (20) jusqu'au récipient (24).

La trémie (7), le tapis (19), la vis sans fin (15) pourront être supportés par un ensemble tel qu'une structure porteuse (18) illustrée à la figure 2.

Ces éléments sont ainsi aisément installés et déplacés lors du changement de site. Pour le transport, ils peuvent être intégrés dans le conteneur (10).

Lors des transports, le dispositif à vis sans fin (8) peut être translaté pour intégrer le volume intérieur du conteneur (10). L'ensemble constitué présente alors un encombrement réduit et le conteneur (10) contient l'ensemble des éléments constitutifs de l'unité (1).

Des jambes hydrauliques (11) assurent le positionnement vertical de l'unité (1) et permettent de la soulever pour son chargement sur le véhicule transporteur.

On obtient de cette façon une unité mobile présentant une capacité de traitement importante pouvant convenir à des opérations d'évacuation des boues sur différents sites.

Ces opérations s'effectuent de façon très automatisée. Par ailleurs, l'unité (1) peut être autonome du point de vue énergétique par le biais d'un groupe électrogène (12) avec une unité de contrôle.

Les coûts d'évacuation et de traitement des boues sont donc fortement diminués par la présente invention. Par ailleurs, elle assure une réutilisation complète des composants des boues.

## Revendications

1. Procédé de traitement des boues, telles que celles issues de la décantation des vinasses dans les cuves de stockage (17) notamment utilisable dans l'industrie de stockage et de négoce de produits liquides issus des industries sucrières, caractérisé par le fait que :
- on évacue les boues hors de la cuve (17);
- on sépare la phase solide de la phase liquide des boues pour éviter les pertes de volume de stockage dans les cuves et autoriser la réinjection de la phase liquide dans les cuves et le recyclage de la phase solide.

2. Procédé de traitement des boues selon la revendication 1, caractérisé par le fait qu'on incorpore un desséchant végétal (6) à la phase solide des boues pour former un mélange recyclable notamment pour l'épandage agricole.

3. Unité de traitement (1) des boues, telles que celles issues de la décantation des vinasses dans les cuves de stockage (17), pour la mise en oeuvre du procédé selon l'une des revendications 1 ou 2, notamment utilisable dans l'industrie de stockage de négoce de produits liquides issus des industries sucrières, caractérisée par le fait qu'elle comporte :
- des moyens d'évacuation (2) des boues hors de la cuve tels que des moyens de pompage,
- des moyens de séparation (3) de la phase solide et de la phase liquide des boues,
évitant les pertes de volume de stockage dans les cuves et autorisant la réinjection de la phase liquide dans les cuves et le recyclage de la phase solide.

4. Unité de traitement (1) des boues selon la revendication 3, caractérisée par le fait que les moyens de séparation (3) sont constitués par une décanteuse ou une centrifugeuse.

5. Unité de traitement des boues selon l'une des revendications 3 ou 4, caractérisée par le fait qu'elle comprend des moyens d'incorporation d'un desséchant végétal (6) à la phase solide des boues, lesdits moyens comportant :
- un élément de stockage du desséchant tel qu'une trémie (7),
- des moyens de mélange du desséchant (6) et de la phase solide tel qu'un dispositif à vis sans fin (8).

6. Unité de traitement (1) des boues selon l'une des revendications 3 à 5, caractérisée par le fait qu'elle comporte une cuve intermédiaire (9) en amont des moyens de séparation (3) permettant d'éventuels prémélanges.

7. Unité de traitement (1) des boues selon l'une des revendications 3 à 6, caractérisée par le fait qu'elle comprend :
- un conteneur (10) susceptible d'être chargé sur un véhicule et de contenir les autres éléments constitutifs de l'unité (1);
- des jambes hydrauliques (11) disposées à l'extérieur du conteneur (10) et permettant de soulever celui-ci pour son chargement sur le véhicule, afin d'autoriser la mobilité de l'unité (1) et son installation sur tout site de stockage.

8. Produit de fertilisation (20), notamment pour l'épandage agricole, caractérisé par le fait qu'il comprend :
- un desséchant végétal (6),
- un composant constitué par la phase solide des boues issues de la décantation des vinasses.

9. Produit de fertilisation (20) selon la revendication 8, caractérisé par le fait que le desséchant (6) est de la sciure de bois.
